# EUROPÄISCHE PATENTSCHRIFT

(11) **EP 0 876 288 B1**
(45) Veröffentlichungstag und Bekanntmachung des Hinweises auf die Patenterteilung: **29.01.2003**
(21) Anmeldenummer: 97942747.3
(22) Anmeldetag: 10.10.1997
(51) Int. Cl.: B65G 1/06

(54) **FÖRDERVORRICHTUNG FÜR REGALKANÄLE VON REGALLAGERANLAGEN**
CONVEYOR FOR CHANNELS BETWEEN STORAGE RACKS
DISPOSITIF DE TRANSPORT POUR CANAUX MENAGES ENTRE DES RAYONNAGES D'ENTREPOSAGE

(30) Priorität: 01.11.1996 CH 270496
(43) Veröffentlichungstag der Anmeldung: 11.11.1998
(73) Patentinhaber: Gilgen Logistics Systems AG, 3173 Oberwangen (CH)
(72) Erfinder: HALDIMANN, Hans-Rudolf, CH-6900 Lugano (CH)
(74) Vertreter: Rottmann, Maximilian R.
(86) Internationale Anmeldenummer: CH9700384
(87) Internationale Veröffentlichungsnummer: WO98019941

(56) Entgegenhaltungen:
- WO-A-94/00370

## Beschreibung

Die Erfindung betrifft eine Fördervorrichtung für Regalkanäle von Regallageranlagen nach dem Oberbegriff des Anspruchs 1.

Fördervorrichtungen für Regalkanäle von Regallageranlagen der hier zur Rede stehenden Art weisen üblicherweise zwei parallel angeordnete, umlaufende Fördermittel auf, mittels welchen die Güter in den einzelnen Regalkanälen ein- und auch wieder ausgelagert werden können. Die eine, die einzulagernden Güter aufnehmende Hälfte des Fördermittels ist zumeist als Rollen- oder Tragrollenkette ausgebildet, währenddem die andere Hälfte als Band ausgebildet ist. Diese Ausgestaltung senkt die Kosten und spart Gewicht.

Um eine sichere Kraftschlussverbindung zwischen den auf dem Fördermittel abgestellten Paletten und der Kette sicherzustellen, sind die einzelnen Kettenglieder mit spitzen Erhebungen versehen, welche sich im Holz der Palette verkrallen. In diesem Zusammenhang stellt sich ein seit langem bekanntes Problem, indem sich beim Umlenken die einzelnen Kettenglieder gegeneinander Verdrehen. Dieses Verdrehen führt an der Umlenkstelle zu einer relativen Verschiebung der Erhebungen vom einen zum anderen Kettenglied. Da die Palette gleichzeitig sowohl auf dem bei der Umlenkung wegdrehenden, wie auch auf dem sich unmittelbar dahinter anschliessenden, in horizontaler Stellung befindlichen Kettenglied aufliegt, werden während des Umlenkvorgangs Holzsplitter aus der Palette herausgerissen. Es versteht sich, dass dies unerwünscht ist.

Es ist daher die Aufgabe der Erfindung, eine Fördervorrichtung für Regalkanäle von Regallageranlagen vorzuschlagen, welche preisgünstig hergestellt werden kann und zugleich einen schonenden, zuverlässigen und sicheren Betrieb ermöglicht.

Diese Aufgabe kann durch die im Kennzeichen des Anspruchs 1 aufgeführten Merkmale gelöst werden.

Bevorzugte Ausführungsformen des Anspruchs 1 sind in den abhängigen Ansprüche 2 und 3 umschrieben.

Durch die im Anspruch 1 umschriebenen Merkmale, dass das jeweilige, im Bereich der Entnahmeseite des Regalkanals angeordnete Umlenkmittel orts- und drehfest ausgebildet ist, wobei die Stirnseite des Umlenkmittels im wesentlichen rund ist, und wobei das Umlenkmittel auf der Oberseite mit einer Vertiefung versehen ist, welche mit den Rollen oder Tragrollen der Kette derart zusammenzuwirken bestimmt ist, dass das einzelne Kettenglied bei Beginn des Umlenkens horizontal abgesenkt wird, wird die eingangs gestellte Aufgabe besonders vorteilhaft gelöst, da damit das Ausreissen von Spänen verhindert wird.

Nachfolgend soll ein Ausführungsbeispiel der Erfindung anhand von Zeichnungen näher erläutert werden. In diesen Zeichnungen zeigt:
- Fig. 1: ein schematisch dargestelltes Fördermittel eines Regalkanals im Längsschnitt;
- Fig. 1a: eine vergrösserte Darstellung der vorderen Umlenkung;
- Fig. 2: das Fördermittel gemäss Fig. 1 in einer verschobenen Position;
- Fig. 3: das vordere Ende des Fördermittels in einer erste Phase unmittelbar vor dem Umlenkvorgang;
- Fig. 4: das vordere Ende des Fördermittels in einer zweiten Phase während des Umlenkvorgangs;
- Fig. 5: das vordere Ende des Fördermittels in einer dritten Phase während des Umlenkvorgangs,
- Fig. 6: das vordere Ende des Fördermittels in einer vierten Phase während des Umlenkvorgangs, und
- Fig. 7: das vordere Ende des Fördermittels in einer fünften Phase während des Umlenkvorgangs.

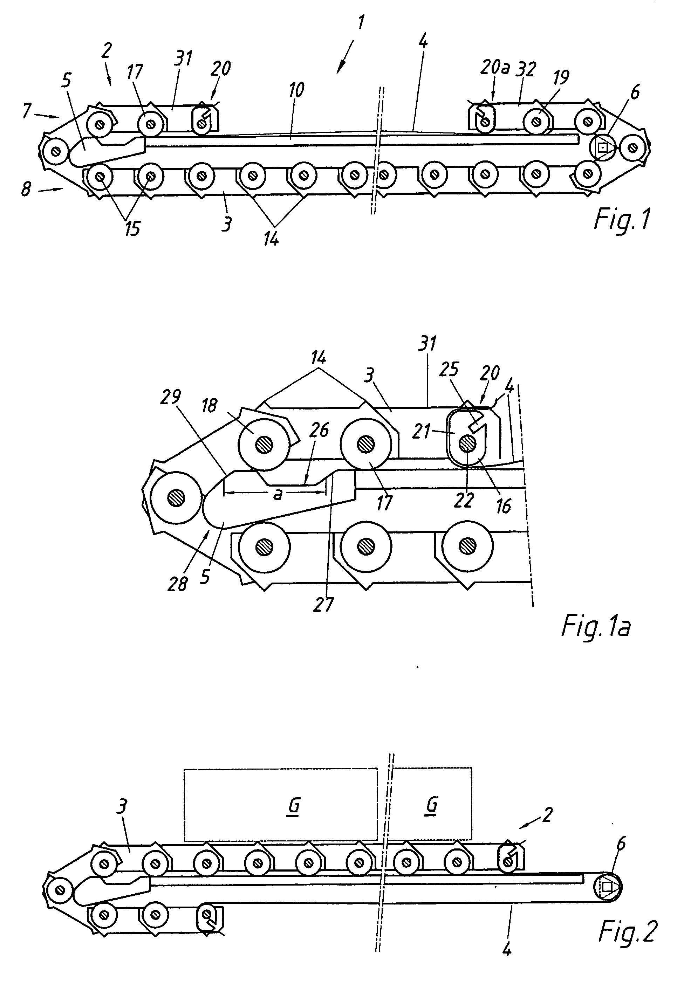

Fig. 1 zeigt einen Längsschnitt durch ein schematisch dargestelltes Fördermittel 2 einer Fördervorrichtung 1, welche in einem Regalkanal einer Regallageranlage zum Einsatz kommt. Aus den Fig. 1a und 1b sind zudem vergrösserte Ausschnitte der Fig. 1 ersichtlich.

Um Güter in einem Regalkanal hintereinander ein- und auslagern zu können, ist jeder Regalkanal mit einer Fördervorrichtung 1 versehen, welche im wesentlichen aus zwei parallel angeordneten, umlaufenden Fördermitteln 2 besteht. Als eigentliches Tragelement dieses Fördermittels 2 ist eine Tragrollenkette 3 vorgesehen. Damit Kosten und Gewicht optimiert werden können, ist das Fördermittel 2 nur ca. zur Hälfte als Kette 3 ausgebildet. Die beiden Endglieder 31, 32 dieser Kette 3 sind durch ein Band 4 miteinander verbunden. Zum Umlenken des Fördermittels 2 ist eine vordere, der Entnahmeseite des Regalkanals zugewandte Umlenkung 5 sowie eine hintere, der Entnahmeseite des Regalkanals abgewandte Umlenkung 6 vorgesehen. Die vordere Umlenkung besteht aus einem orts- und drehfest angeordneten Formprofilelement 5, währenddem die hintere Umlenkung durch eine drehbare Walze 6 gebildet wird. Durch diese beiden Umlenkungen 5, 6 wird das Fördermittel 3 in ein oberes und ein unteres Trum 7, 8 unterteilt. Als Laufbahn für das obere Trum 7 der Kette 3 ist eine Schiene 10 vorgesehen. Das untere Trum 8 der Kette 3 wird auf der Unterseite der Schiene 10 über nicht näher dargestellte Mittel abgestützt.

Die einzelnen Kettenglieder der Tragrollenkette 3 sind auf der Oberseite mit spitz zulaufenden Erhebungen 14 versehen. Diese Erhebungen 14 stellen eine sichere, kraftschlüssige Verbindung zwischen der Kette 3 und den darauf aufliegenden Gütern sicher, wobei die Güter im Normalfall auf Paletten aufgenommen sind, in denen sich die Erhebungen 14 verkrallen können. In der Fig. 1 ist die Kette 3 in ihrer vorderen Endstellung eingezeichnet, in der noch keine Güter im entsprechenden Regalkanal eingelagert sind.

Das als vordere Kettenumlenkung vorgesehene Formprofilelement 5 ist in der Fig. 1a vergrössert dargestellt. Auf der Oberseite dieses Formprofilelements 5 ist eine Vertiefung 26 vorgesehen, währenddem die Stirnseite 28 im wesentlichen rund ausgebildet ist. Am Anfang der Vertiefung 26 ist, in Bewegungsrichtung der Kette 3 bei der Entnahme von Gütern gesehen, eine Rampe 27 vorhanden, über welche die Tragrolle 17 des jeweiligen Kettengliedes in die Vertiefung 26 rollen kann. Eine zweite Rampe 29 ist als Übergang zwischen der Oberseite des Formprofilelements 5 und dessen Vorderseite 28 vorgesehen. Wichtig ist, dass der horizontale Abstand a zwischen dem jeweiligen Abschnitt der Rampe 27 und dem bezüglich der Höhenlage korrespondierenden Abschnitt der Rampe 29 des Umlenkmittels 5 zumindest annähernd dem Achsabstand von zwei benachbarten Rollen oder Tragrollen 17, 18 (Fig. 1a) entspricht.

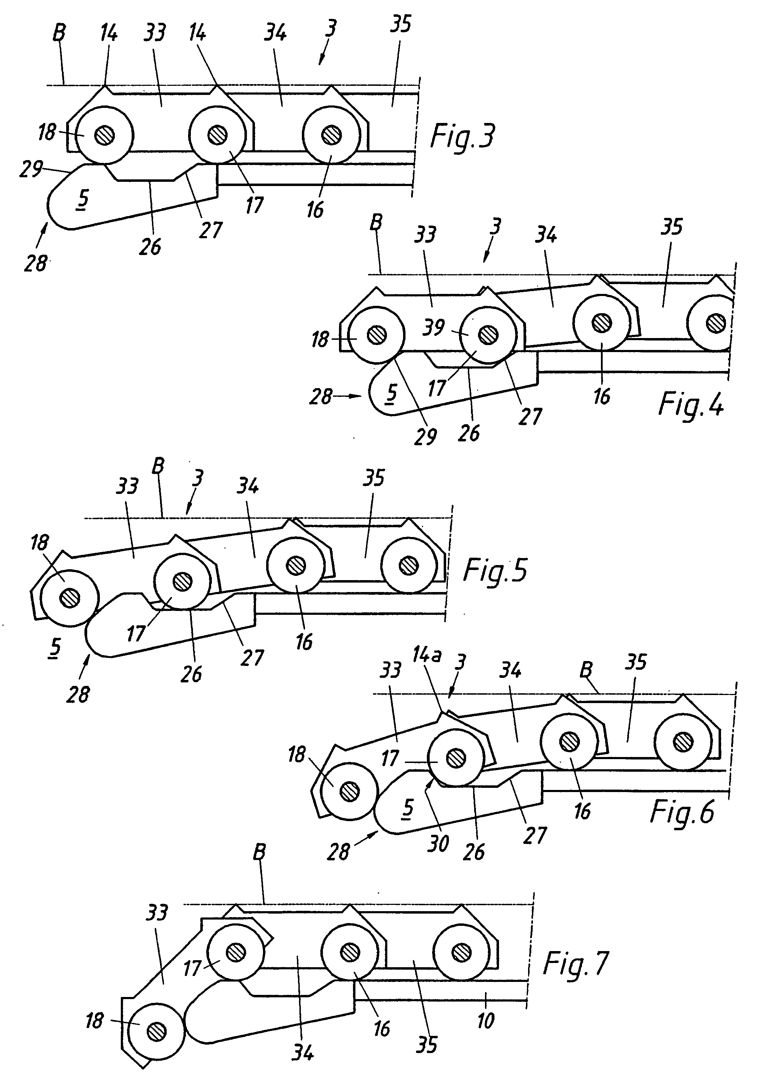

Der genaue Ablauf des Umlenkvorgangs der Kette 3 mit Hilfe dieses Formprofilelements 5 wird nachfolgend anhand der Fig. 3 bis 7 noch näher erläutert.

In der in Fig. 1 dargestellten vorderen Endstellung des Fördermittels 2 umgreift die Kette 3 die Walze 6. Durch dieses Umgreifen und die Kopplung der beiden Walzen 6 wird das Förderkettenpaar der Fördervorrichtung 1 zwangsweise gekoppelt. Auf diese Weise kann sichergestellt werden, dass zu Beginn des Einlagerns von Gütern, wenn der jeweilige Regalkanal noch leer ist, die beiden Fördermittel synchron bewegt werden, auch wenn nur auf das eine dieser beiden Fördermittel eine Verschiebekraft ausgeübt wird. Sobald im Regalkanal Güter eingelagert sind, sind die beiden Fördermittel miteinander gekoppelt, da das eingelagerte Gut bzw. die eingelagerten Güter gleichzeitig auf beiden Ketten eines Kettenpaares aufliegen, wodurch sich zwangsläufig eine Synchronisation der beiden Fördermittel ergibt.

Fig. 2 zeigt das Förderelement in einer gegenüber der Fig. 1 verschobenen Stellung. In dieser Darstellung sind schematisch Güter G eingezeichnet, welche auf der Kette 3 abgestützt und im jeweiligen Regalkanal eingelagert sind. Normalerweise werden die Güter G nicht direkt auf die Kette 3 gelegt, sondern jeweils auf einer Palette abgelegt, welche dann ihrerseits auf der Kette 3 aufliegt. Da derartige Paletten jedoch längst bekannt sind, wurde auf deren Darstellung verzichtet.

Das Einlagern von Gütern G erfolgt von der linken Seite her, indem diese mittels eines Flurförderzeuges, beispielsweise einem Gabelstapler, auf der Kette 3 abgestellt und von diesem in den Regalkanal hineingeschoben werden. Wenn, wie im vorliegenden Beispiel angedeutet, Güter G eingelagert sind, wird durch letztere eine kraftschlüssige Verbindung zwischen den beiden Fördermitteln hergestellt. Daher spielt es keine Rolle, dass, wie hier angedeutet, das Band 4 um die Walze 6 umgelenkt wird und keine kraft- oder formschlüssige Verbindung mehr zwischen dem Fördermittel 2 und den Walzen 6 besteht.

Anhand der Fig. 3 bis 7 soll das Prinzip des Umlenkvorgangs der Kette 3 am vorderen, als Formprofilelement 5 ausgebildeten Umlenkmittel näher erläutert werden. Dazu sind schematisch jeweils einige Kettenglieder 33, 34, 35 in verschiedenen Phasen unmittelbar vor und während dieses Umlenkvorgangs dargestellt.

Fig. 3 zeigt den Ausgangszustand, in dem sich das vorderste Kettenglied 33 in horizontaler Stellung und auf gleicher Höhe mit den dahinter liegenden Kettengliedern 34, 35 befindet. Um das Zusammenwirken der Kette 3 mit den darauf aufgenommenen Gütern besser erläutern zu können, ist schematisch ein Bodenbrett B einer Palette eingezeichnet, welches auf einzelnen Kettengliedern aufliegt. Beim Verschieben der Kette 3 in die in Fig. 4 dargestellte Lage senkt sich das vorderste Kettenglied 33 ab, ohne sich dabei um seine Querachse zu verdrehen. Dies kommt daher, dass sich beide Rollen 17, 18 gleichzeitig nach unten bewegen. Die hintere Rolle 17 rollt der Rampe 27 entlang nach unten, währenddem gleichzeitig die vordere Rolle 18 der Rampe 29 an der Stirnseite 28 des Formprofilelements 5 entlang nach unten rollt. Durch das Absenken des vordersten Kettengliedes 33 wird die Kraftschlussverbindung zwischen diesem vordersten Kettenglied 33 und dem Bodenbrett B der Palette aufgehoben.

Wird nun die Kette 3 weiter in die in Fig. 5 dargestellte Position bewegt, so beginnt sich das vorderste Kettenglied 33 um die Achse seiner hinteren Rolle 17 nach unten wegzudrehen. Da das vorderste Kettenglied 33 gegenüber den dahinter liegenden Kettengliedern 34, 35 abgesenkt ist, befindet sich dieses nicht mehr in Verbindung mit dem Bodenbrett B der Palette, wodurch beim Verdrehen keine Späne aus dem Bodenbrett B gerissen werden.

Nachdem sich das vorderste Kettenglied 33 in die in Fig. 6 dargestellte Position verdreht hat, fährt dessen hintere Rolle 17 an der am vorderen Ende der Vertiefung 26 angeformten Abschrägung 30 nach oben, ohne dass die hintere, spitze Erhebung 14a des vordersten Kettengliedes 33 wieder mit dem Bodenbrett B der Palette in Berührung kommt.

Fig. 7 zeigt den Zustand, in dem sich die hintere Rolle 17 wiederum auf der Höhe der Lauffläche der Schiene 10 befindet. Aus dieser Darstellung ist ebenfalls deutlich ersichtlich, dass die hintere Erhebung nicht mehr mit dem Bodenbrett B der Palette in Berührung kommen kann.

Der vorgängig geschilderte Effekt tritt natürlich auch dann ein, wenn die Kette 3 in der anderen Richtung bewegt, d.h. nach rechts verschoben wird und Güter ein- anstatt ausgelagert werden.

Zusammenfassend kann festgehalten werden, dass durch die vorgeschlagenen Umlenkmittel ein schonender und sicherer Betrieb der Fördervorrichtung erreicht wird. So kann die hintere, drehbare Umlenkung sowohl Kette wie auch Band umlenken. Durch die Kopplung der beiden Fördermittel zu Beginn des Einlagerns von Gütern wird sichergestellt, dass diese jeweils synchron bewegt werden. Im weiteren wird durch die besondere Ausgestaltung des vorderen Umlenkmittels erreicht, dass die Paletten beim Einund Auslagern geschont werden, indem keine Späne mehr ausgerissen werden. Schliesslich kann durch die vorgeschlagene Anordnung und Ausbildung des Spann- und Haltemechanismus die Spannung des jeweiligen Fördermittels auf einfachste Weise den Anforderungen angepasst werden.

## Patentansprüche

1. Fördervorrichtung (1) für Regalkanäle von Regallageranlagen, mit einem umlaufenden Fördermittel (2) zur Aufnahme von einzulagernden Gütern (G), wobei das Fördermittel (2) zumindest teilweise als Rollen- oder Tragrollenkette (3) ausgebildet ist, deren einzelne Kettenglieder zur Erhöhung des Kraftschlusses zwischen Kette (3) und einzulagernden Gütern (G) mit spitzen Erhebungen (14) versehen sind, und wobei zwei Umlenkmittel (5, 6) für das Fördermittel (3) vorgesehen sind, mittels welchen das Fördermittel (3) in eine oberes und ein unteres Trum (7,8) unterteilt wird, **dadurch gekennzeichnet, dass** das jeweilige, im Bereich der Entnahmeseite des Regalkanals befindliche Umlenkmittel als orts- und drehfestes Umlenkorgan (5) ausgebildet ist, dessen Stirnseite (28) im wesentlichen rund ist und dessen Oberseite mit einer Vertiefung (26) versehen ist, welche mit den Rollen oder Tragrollen (17, 18) der Kette (3) derart zusammenzuwirken bestimmt ist, dass das einzelne Kettenglied (33) unmittelbar vor dem eigentlichen Umlenken horizontal abgesenkt wird.

2. Fördervorrichtung nach Anspruch 1, **dadurch gekennzeichnet, dass** die Vertiefung (26) kürzer ist als der Achsabstand zwischen zwei benachbarten Rollen- oder Tragrollen (17, 18) der Kette (3) und dass der horizontale Abstand zwischen dem entnahmeseitigen Ende der Vertiefung (26) und der Stirnseite (28) des Umlenkmittels (5) kürzer ist als der Achsabstand von zwei benachbarten Rollen- oder Tragrollen (17, 18).

3. Fördervorrichtung nach Anspruch 1 oder 2, **dadurch gekennzeichnet, dass**, in Bewegungsrichtung der Kette (3) bei der Entnahme von Gütern (G) gesehen, am Anfang der Vertiefung (26) und vor der Stirnseite (28) je eine Rampe (27; 29) vorgesehen ist, und dass der horizontale Abstand (a) zwischen bezüglich der Höhenlage korrespondierenden Abschnitten der Rampen (27; 28) zumindest annähernd dem Achsabstand von zwei benachbarten Rollenoder Tragrollen (17, 18) entspricht.

## Claims

1. Conveying apparatus (1) for rack channels of rack-storage installations, having a circulating conveying means (2) for receiving goods (G) which are to be stored, the conveying means (2) being designed, at least in part, as a roller or carrier-roller chain (3), the individual chain lengths of which, in order to increase the force fit between the chain (3) and goods (G) which are to be stored, are provided with pointed elevations (14), and two deflecting means (5, 6) being provided for the conveying means (3), said deflecting means subdividing the conveying means (3) into a top and a bottom strand (7, 8), **characterized in that** the respective deflecting means located in the region of the removal side of the rack channel is designed as a stationary and rotationally fixed deflecting element (5), the end side (28) of which is essentially round and the top side of which is provided with a depression (26) which is intended for interacting with the rollers or carrying rollers (17, 18) of the chain (3) such that the individual chain link (33) is lowered horizontally immediately before the actual deflecting operation.

2. Conveying apparatus according to Claim 1, **characterized in that** the depression (26) is shorter than the centre-to-centre distance between two adjacent rollers or carrying rollers (17, 18) of the chain (3), and **in that** the horizontal distance between the removal end of the depression (26) and the end side (28) of the deflecting means (5) is shorter than the centre-to-centre distance between two adjacent rollers or carrying rollers (17, 18).

3. Conveying apparatus according to Claim 1 or 2, **characterized in that** in each case one ramp (27; 29) is provided at the start of the depression (26) and in front of the end side (28), as seen in the direction in which the chain (3) moves when removing goods (G), and **in that** the horizontal distance (a) between sections of the ramps (27; 29) which correspond in terms of vertical position corresponds at least approximately to the centre-to-centre distance between two adjacent rollers or carrying rollers (17, 18).

## Revendications

1. Dispositif de transport pour canaux ménagés entre des rayonnages d'entreposage avec un moyen de transport se déplaçant dans le sens circulaire (2) et servant à recevoir des marchandises à stocker (G), le moyen de transport (2) étant au moins partiellement réalisé comme chaîne à rouleaux ou à rouleaux porteurs (3), dont les différents maillons sont, dans le but d'augmenter l'adhérence entre la chaîne (3) et les marchandises à stocker (G), munis d'élévations pointues (14), et deux éléments de renvoi (5, 6), à l'aide desquels le moyen de transport (3) est réparti en une section libre supérieure et en une section libre inférieure (7, 8), étant prévus pour le moyen de transport (3), **caractérisé en ce que** l'élément de renvoi respectif se trouvant dans la zone située du côté du prélèvement du canal de rayonnage est conçu comme élément de renvoi (5) stationnaire et bloqué en rotation, dont le côté frontal (28) est sensiblement arrondi et dont le côté supérieur est muni d'un évidement (26), qui est prévu pour être en interaction telle avec les rouleaux ou les rouleaux porteurs (17, 18) de la chaîne (3) que chaque maillon individuel (33) est abaissé dans le sens horizontal immédiatement avant le mouvement de renvoi proprement dit.

2. Dispositif de transport selon la revendication 1, **caractérisé en ce que** l'évidement (26) est plus court que l'espacement entre les axes de deux rouleaux ou rouleaux porteurs voisins (17, 18) de la chaîne (3) et **en ce que** l'espacement horizontal entre l'extrémité de l'évidement (26) se trouvant du côté du prélèvement et le côté frontal (28) de l'élément de renvoi (5) est plus court que l'espacement entre les axes de deux rouleaux ou rouleaux porteurs voisins (17, 18).

3. Dispositif de transport selon la revendication 1 ou 2, **caractérisé en ce que**, vu en direction de déplacement de la chaîne (3) lors du prélèvement de marchandises (G), une rampe (27, 29) est prévue respectivement au début de l'évidement (26) et devant le côté frontal (28) et **en ce que** l'espacement horizontal (a) entre des sections des rampes (27, 28), qui sont en concordance entre elles en ce qui concerne leur position en hauteur, correspond au moins approximativement à l'espacement entre les axes de deux rouleaux ou rouleaux porteurs voisins (17, 18).
